# EUROPÄISCHE PATENTSCHRIFT

(11) **EP 2 170 696 B1**
(45) Veröffentlichungstag und Bekanntmachung des Hinweises auf die Patenterteilung: **29.08.2012**
(21) Anmeldenummer: 08774921.4
(22) Anmeldetag: 09.07.2008
(51) Int. Cl.: B64C 1/06

(54) **PROFIL MIT WENIGSTENS EINEM HOHLPROFILABSCHNITT**
PROFILE COMPRISING AT LEAST ONE HOLLOW PROFILE SECTION
PROFILÉ PRÉSENTANT AU MOINS UNE SECTION À PROFIL CREUX

(30) Priorität: 20.07.2007 DE 102007033868; 20.07.2007 US 950965 P
(43) Veröffentlichungstag der Anmeldung: 07.04.2010
(73) Patentinhaber: Airbus Operations GmbH, 21129 Hamburg (DE)
(72) Erfinder: NOEBEL, Torsten, 25436 Neuendeich (DE); PAULUKUHN, Arne, 46519 Alpen (DE)
(74) Vertreter: Isarpatent
(86) Internationale Anmeldenummer: PCT/EP2008/058915
(87) Internationale Veröffentlichungsnummer: WO 2009/013133

(56) Entgegenhaltungen:
- JP-A- 4 260 815
- JP-A- 10 058 973
- US-A- 2 383 634

## Beschreibung

Die vorliegende Erfindung bezieht sich auf ein Profil mit wenigstens einem Hohlprofilabschnitt, das beispielsweise als Stringer oder Spant eingesetzt werden kann, zum Beispiel im Flugzeugbau oder im Raumfahrtbereich.

Rümpfe moderner Verkehrsflugzeuge weisen grundsätzlich eine aus einer außenseitigen Haut und Strukturbauteilen bestehende Rumpfanordnung auf. Die Strukturbauteile, also beispielsweise Stringer oder Spanten, sind dabei mit der Haut insbesondere für eine hohe Stabilität des Rumpfs verbunden und bilden eine quer- und längsversteifte Tragkonstruktion, welche die Außenhaut stützt. Diese Einheiten, auch Schalen genannt, werden zu Sektionen bzw. Röhrenabschnitten zusammengefügt und bilden im weiteren Zusammenbau in der Summe den Druckrumpf.

Aus dem Stand der Technik (z.B. US 2383634) ist allgemein bekannt, sog. Omega-Profile als Stringer zu verwenden. Diese Omega-Profile haben den Vorteil, dass sie eine bessere strukturelle Integrität aufweisen.

Ein erheblicher Nachteil der Omega-Profile ist jedoch, dass weitere Elemente, wie beispielsweise Clips und Cleats usw., nur über Blindnieten an den Omega-Profilen befestigt werden können. Das bedeutet, dass die Nieten nur von außen zugänglich sind und dort überprüft werden können nicht aber von innen. Dies stellt insbesondere ein Problem dar in besonders sicherheitsrelevanten Bereichen, wie der Verbindung von Rumpfsektionen oder dem hinteren Druckschott. Dort ist eine Verbindung mittels Blindnieten normalerweise nicht erwünscht, wegen der eingeschränkten Überprüfbarkeit der Nietverbindungen.

Obwohl auf beliebige Rumpfarten und andere Bauteile anwendbar, werden die vorliegende Erfindung sowie die ihr zugrundeliegende Problematik in Bezug auf einen Rumpf eines Verkehrsflugzeuges näher erläutert.

Es ist daher Aufgabe der vorliegenden Erfindung, ein Profil mit wenigstens einem Hohlprofilabschnitt bereitzustellen, dass in wenigstens einem Abschnitt eine Befestigung von weiteren Bauteilen zulässt, wobei auf eine Blindnietbefestigung verzichtet werden kann.

Erfindungsgemäß wird diese Aufgabe durch ein Profil mit wenigstens einem Hohlprofilabschnitt mit den Merkmalen des Patentanspruchs 1 gelöst.

Demgemäß wird ein Profil zum Einsatz insbesondere in einem Luft- oder Raumfahrzeugs bereitgestellt, wobei das Profil wenigstens einen Hohlprofilabschnitt und einen T- und/oder L-Profilabschnitt aufweist.

Die der vorliegenden Erfindung zugrundeliegende Idee besteht darin, zum einen die Vorteile zu nutzen die ein Hohlprofil bietet, insbesondere ein Omega-Profil, und andererseits die Nachteile dieses Profils zu beseitigen.

Dies wird erreicht, indem wenigstens ein Abschnitt des erfindungsgemäßen Profils als Hohlprofil, beispielsweise als Omega-Profil, ausgebildet wird und wenigstens ein Abschnitt des Profils zum Befestigen von weiteren Elementen als ein T-und/oder L-Profil. Dieses T- bzw. L-Profil hat den Vorteil, dass es von beiden Seiten zugänglich ist und dadurch beispielsweise ein Befestigen von weiteren Bauteilen, wie Clips, Cleats, Stringern, Spanten usw., mit Nieten und/oder anderen Befestigungsmitteln erfolgen kann, die von beiden Seiten zugänglich und überprüfbar sind, so dass beispielsweise keine Blindnieten entstehen, mit den zuvor beschriebenen Nachteilen.

Somit erlaubt es die Erfindung Profile mit wenigstens einem Hohlprofilabschnitt zu nutzen, insbesondere auch in besonders sicherheitsrelevanten Bereichen, in denen die bekannten Hohlprofile zuvor nicht eingesetzt werden konnten oder nur mit erheblichen Einschränkungen.

Weitere Ausgestaltungen und Weiterbildungen der Erfindung ergeben sich aus den Unteransprüchen sowie der Beschreibung unter Bezugnahme auf die Zeichnungen.

Gemäß einer Weiterbildung der Erfindung weist das Profil einen Übergangsabschnitt zwischen wenigstens einem Hohlprofilabschnitt und einem T- und/oder L-Profilabschnitt auf. Dies hat den Vorteil, dass ein kontinuierlicher Lasttransfer erzielt werden kann.

In einer weiteren erfindungsgemäßen Ausgestaltung weist das Profil wenigstens zwei oder mehr Hohlprofilabschnitte auf, wobei die Hohlprofilabschnitte die gleiche Querschnittsform und/oder eine voneinander verschiedene Querschnittsform aufweisen können. Dies hat den Vorteil, dass die Querschnittsformen der Hohlprofilabschnitte an die jeweilige Funktion in einem bestimmten Bereich, wo das erfindungsgemäße Profil angeordnet wird und/oder an bestimmte Belastungen angepasst werden können.

In einer anderen erfindungsgemäßen Ausführungsform weist das Profil wenigstens zwei oder mehr T- und/oder L-Profilabschnitte auf, wobei die T- bzw. L-Profile in ihren Abmessungen und/oder Formen identisch ausgebildet sein können oder verschieden voneinander. Dies hat den Vorteil, dass die T-bzw. L-Profile beispielsweise individuell an die Teile mit denen die T- bzw. L-Profile verbunden werden sollen angepasst werden können. Das T- bzw. L-Profil muss dabei keine senkrechte Wand bilden, sondern kann beispielsweise auch eine geneigte Wand und/oder eine abgestuft wand aufweisen. Dabei kann sich die Basis des T-Profils beispielsweise zu beiden Seiten der Wand mit der gleichen Länge erstrecken oder jeweils unterschiedliche Abmessungen zur Wand aufweisen. Des Weiteren kann die nach oben stehende Wand des T- bzw. L-Profils zusätzlich auf einer oder beiden Seiten mit einer Art Dach versehen sein.

In einer weiteren erfindungsgemäßen Ausführungsform werden die T- bzw. L-Profilabschnitte beispielsweise über Nieten, Schrauben und/oder Bolzen mit einem anderen Bauteil, wie zum Beispiel einem Clip, Cleat oder einem anderen T- oder L-Profilabschnitt, verbunden. Als Nieten können hierbei Standardnieten oder auch hochfeste Nieten verwendet werden. Ein weiterer Vorteil ist, dass alle gängigen Befestigungsmöglichkeiten verwendet werden können, da der T- bzw. L-Profilabschnitt von beiden Seiten leicht zugänglich ist.

In einer weiteren erfindungsgemäßen Ausführungsform ist das Profil als Stringer und/oder Spant ausgebildet. Dies hat den Vorteil, dass beispielsweise Stringer die bei verschiedenen Rumpfsektionsabschnitten verwendet werden, sehr einfach miteinander beispielsweise über eine sog. Stringerkupplung miteinander verbunden werden können. Dadurch entfällt die bisher sehr komplizierte Verbindung von Rumpfsektionsabschnitten bei denen herkömmliche Hohlprofile als Stringer eingesetzt werden.

Gemäß einer weiteren erfindungsgemäßen Ausführungsform weist das Profil wenigstens einen oder mehrere Verbundwerkstoffe auf. Zu diesen Verbundwerkstoffen gehören unter anderem beispielsweise GLARE, HSS-GLARE, CFK, GFK und/oder AFK. Die Erfindung ist jedoch nicht auf diese Verbundwerkstoffe beschränkt sondern umfasst alle Arten von Verbundwerkstoffen, die geeignet sind im Luft- und Raumfahrtbereich eingesetzt zu werden.

In einer andere erfindungsgemäßen Ausführungsform weist das erfindungsgemäße Profil Metall oder eine Metalllegierung, beispielsweise eine Aluminium-, Stahl- und/oder Titanlegierung, auf. Hierbei kann das Profil auch aus einer Kombination aus wenigstens einem oder mehreren der vorgenannten Verbundwerkstoffe und wenigstens einem oder mehreren Metall- oder Metalllegierungen bestehen.

Gemäß einer weiteren erfindungsgemäßen Ausführungsform ist das erfindungsgemäße Profil zumindest zum Teil oder vollständig im Hotmolding-Verfahren hergestellt. Das Verfahren hat den Vorteil, dass auf diese Weise ein Profil insbesondere auch mit einer komplizierteren Formgebung leicht und kostengünstig hergestellt werden kann.

Die Erfindung wird im Folgenden anhand von Ausführungsbeispielen unter Bezugnahme auf die beiliegenden Figuren der Zeichnung näher erläutert. Von den Figuren zeigen:
- Fig. 1: eine perspektivische Ansicht einer Verbindung von zwei Sektionsabschnitten, wobei Omega-Profile als Stringer gemäß dem Stand der Technik eingesetzt sind;
- Fig. 2: ein vergrößerter Ausschnitt der Ansicht gemäß Fig. 1,
- Fig. 3: eine perspektivische Ansicht einer Ausführungsform des erfindungsgemäßen Profils mit einem Hohlprofilabschnitt;
- Fig. 4: eine Seitenansicht des erfindungsgemäßen Profils gemäß Fig. 3; und
- Fig. 5a-c: Beispiele für Ausgestaltungen des T- bzw. L-Profils in einer Querschnittansicht.

In den Figuren bezeichnen gleiche Bezugszeichen gleiche oder funktionsgleiche Komponenten, soweit nichts Gegenteiliges angegeben ist.

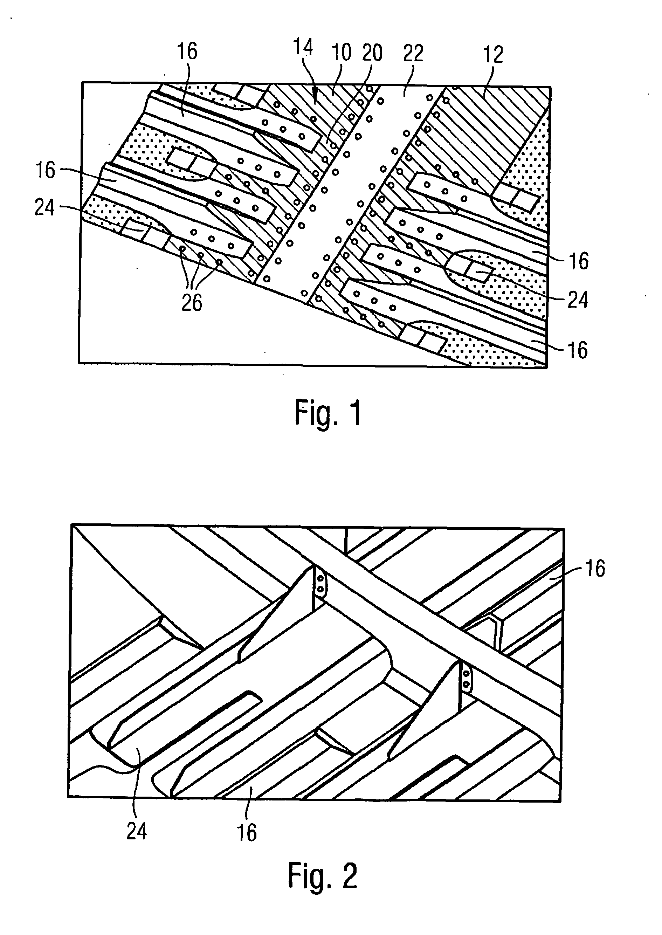

In Fig. 1 ist ein Ausschnitt einer Verbindung von zwei Rumpfsektionen 10, 12 in einer perspektivischen Ansicht dargestellt. Verkehrsflugzeugrümpfe bestehen im allgemeinen aus quer und längsversteiften Tragkonstruktionen, beispielsweise aus einer Kombination von Stringern und Spanten, welche die Außenhaut stützen. Diese Einheiten, auch Schalen genannt, werden zu Sektionen, wie Röhrenabschnitten, zusammengefügt und bilden im weiteren Zusammenbau den Druckrumpf.

Hierbei wird ein Außenhautelement 14 über Stringer 16 in Längsrichtung verstärkt. Die Stringer 16 sind dabei als Omega-Hohlprofile 18 ausgebildet. Wie bereits beschrieben resultiert dies jedoch in dem Problem, dass die jeweiligen Stringer 16 der Rumpfsektionen 10, 12 nicht direkt miteinander verbunden werden können, beispielsweise mittels Nieten, da hierdurch sog. Blindnieten entstünden. Diese Blindnieten wären hierbei nur von der Außenseite der Stringer 16 zugänglich nicht aber von der Innenseite. Darum laufen die Stringer 16 am Ende 20 der Rumpfsektion 10, 12 aus.

Zum Befestigen der beiden Rumpfsektionen 10, 12 wird daher ein zumindest teilweise oder vollständig umlaufendes Band 22 verwendet, dass mit beiden Rumpfsektionen 10, 12 beispielsweise vernietet wird. Des Weiteren werden zwischen den Stringern 16 Bandabschnitte 24 eingelegt, die beispielsweise mittels Nieten 26 befestigt werden.

Dies hat jedoch den Nachteil, dass es mit einem erheblichen zusätzlichen Fertigungs- und Montageaufwand verbunden ist. Des Weiteren kann die Struktur der Stringer 16 in diesem Bereich nicht zur Querversteifung genutzt werden, da eine Verbindung der Stringer 16 der Rumpfsektionen 10, 12 über eine sog. Stringerkupplung aufgrund der dadurch entstehenden Blindnietverbindung nicht möglich ist. Dadurch kann kein kontinuierlicher Lasttransfer erzielt werden.

In Fig. 2 ist des Weiteren ein vergrößerter Ausschnitt der Verbindung der beiden Rumpfsektionen 10, 12 gemäß Fig. 1 gezeigt. Darin sind einerseits die Stringer 16 dargestellt und andererseits die Bandabschnitte 24, die zwischen den Stringern 16 eingelegt sind, um die beiden Rumpfsektionen 10, 12 miteinander zu verbinden.

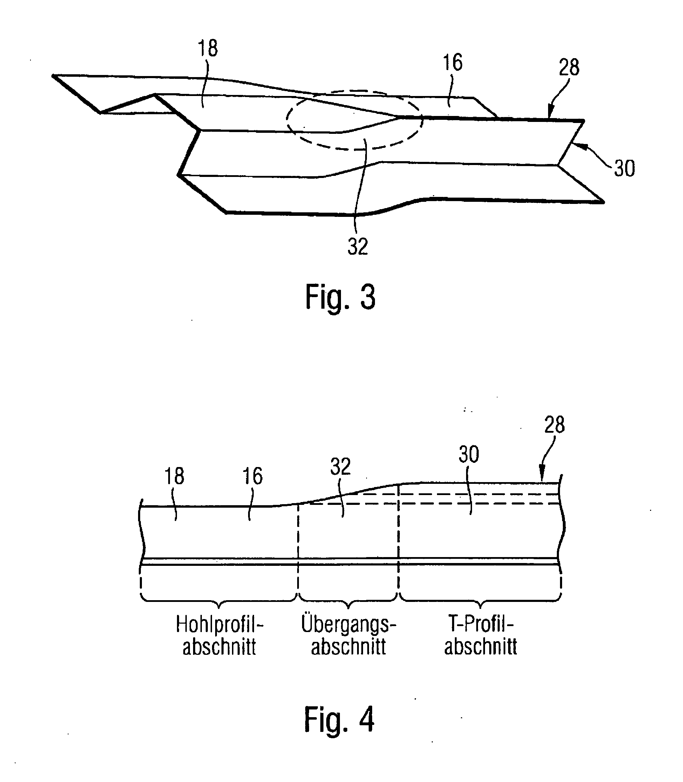

In Fig. 3 ist nun eine perspektivische Ansicht einer ersten Ausführungsform des erfindungsgemäßen Profils 28 dargestellt. Das Profil 28 weist dabei einen Abschnitt mit einem Hohlprofil 18 auf. Dieser Hohlprofilabschnitt 18 ist dabei als Omega-Profil ausgebildet. Grundsätzlich kann das Hohlprofil 18 aber auch jeden anderen Querschnitt aufweisen, je nach Funktion und Einsatzzweck. Die vorliegende Erfindung ist nicht auf einen Omega-Querschnitt beschränkt, sondern der Querschnitt des Hohlprofils 18 kann beliebig variiert werden, je nach Funktion oder Einsatzzweck.

Im Anschluss an den Hohlprofilquerschnitt 18 wird das erfindungsgemäße Profil 28 zu einem T-Profilabschnitt 30 zusammengeführt. Hierbei hat der T-Profilabschnitt 30 den Vorteil, dass an ihm weitere Elemente wie beispielsweise Clips, Cleats und andere Strukturbauteile wie beispielsweise Stringer 16 und Spanten usw. befestigt werden können. Das erfindungsgemä-βe Profil 28 kann dabei beispielsweise als Stringer 16 und/oder Spant (nicht dargestellt) ausgebildet werden.

Ein weiterer erheblicher Vorteil gemäß der Erfindung ist es, dass hierdurch im Gegensatz zum Stand der Technik, wie er in den Fig. 1 und 2 gezeigt ist, beispielsweise die Stringer 16 von gegenüberliegenden Rumpfsektionen 10, 12 sehr einfach miteinander verbunden werden können. Die erfindungsgemäßen Stringer 16 weisen dabei beispielsweise wenigsten einen Hohlprofilabschnitt 18 auf, beispielsweise ein Omega-Hohlprofil, und an wenigstens einem oder beiden Enden einen T-Profilabschnitt 30.

Die T-Profilabschnitte 30 der gegenüberliegenden Stringer 16 der jeweiligen Rumpfsektionen 10, 12 können nun beispielsweise sehr einfach über eine sog. Stringerkupplung (nicht dargestellt) miteinander verbunden werden, beispielsweise mittels einer Nietverbindung. Dabei entstehen im Gegensatz zum Stand der Technik keine Blindnietverbindungen sondern Nietverbindungen die von beiden Seiten zugänglich und überprüfbar sind. Dies hat weiter den Vorteil, dass auf aufwendige und kostspielige Verbindungen der Rumpfsektionen 10, 12 verzichtet werden kann, wie dies bei herkömmlichen Hohlprofil-Stringern 16 bisher der Fall war.

Des Weiteren können hochfeste Nieten bei dem erfindungsgemä-βen Profil 28 eingesetzt werden. Durch das erfindungsgemäße Profil 28 kann darüber hinaus eine leichtere Bauweise erzielt werden. Weiter kann ein besserer Lasttransfer erreicht werden, da beispielsweise verschiedene Rumpfsektionen 10, 12 oder beispielsweise ein Druckschott über die oben genannte Stringer-Kupplung miteinander verbunden werden können.

Der Übergang zwischen dem jeweiligen Hohlprofilabschnitt 18 und dem T-Profilabschnitt 30 kann dabei kontinuierlich ausgebildet sein, wie beispielsweise in Fig. 1 gezeigt ist. Grundsätzlich ist aber auch denkbar, je nach Funktion oder Einsatzzweck, dass der Übergang direkt von dem Hohlprofil 18 auf das T-Profil 30 verläuft (nicht dargestellt), ohne einen Übergangsabschnitt 32 bei dem das Hohlprofil 18 langsam in das T-Profil 30 übergeht, wie in Fig. 1 gezeigt ist.

Des Weiteren kann das erfindungsgemäße Profil 28 auch abwechselnd mit T-Profilabschnitten 30 und Hohlprofilabschnitten 18 ausgebildet werden. Dabei kann wahlweise zwischen den T-Profilabschnitten 30 und Hohlprofilabschnitten 18 der Übergangsabschnitt 32 angeordnet sein, wie er nachfolgend noch mit Bezug auf Fig. 3 beschrieben wird.

Die Hohlprofilabschnitte 18 können dabei jeweils die gleiche Querschnittsform aufweisen, beispielsweise ein Omega-Profil, wie in Fig. 1 und 3 dargestellt ist oder auch unterschiedliche Hohlprofile 18, je nach Funktion oder Einsatzzweck. Auf diese Weise können beispielsweise die Spanten über Clipse oder Cleats sehr einfach an T-Profilabschnitten von erfindungsgemäßen Stringerprofilen 16 befestigt werden, wie sie in Fig. 2 und 3 beispielhaft dargestellt sind.

In Fig. 4 ist die erste Ausführungsform des erfindungsgemäßen Profils 28 in einer Seitenansicht dargestellt. Der erste Abschnitt des erfindungsgemäßen Profils 28 bildet dabei das Hohlprofil 18 in Form eines Omega-Profils. Ein anschließender Abschnitt bildet einen Übergangsabschnitt 32 von dem Hohlprofilabschnitt 18 in einen T-Profilabschnitt 30. Bei einer Herstellung beispielsweise aus einem Verbundwerkstoff wie GFK, kann ein überstehender Abschnitt des Übergangsabschnitts 32 und des T-Profilabschitts 30, der mit einer gestrichelten Linie eingezeichnete wurde, später abgefräst werden, um die Höhe des erfindungsgemäßem Profils 28 beispielsweise zu egalisieren. Dies ist jedoch nicht zwingend notwendig und von der Funktion oder dem Einsatzzweck des erfindungsgemäßen Profils 28 abhängig.

Das erfindungsgemäße Profil 28 kann dabei beispielsweise aus einem Verbundwerkstoff, wie beispielsweise CFK, GFK, GLARE und/oder AFK hergestellt werden, um nur einige von vielen Beispielen für Verbundwerkstoffe zu nennen. Des Weiteren ist auch denkbar, dass das erfindungsgemäße Profil 28 aus Metall bzw. einer Metalllegierung hergestellt wird oder aus einer Kombination aus wenigstens einem Verbundwerkstoff und wenigstens einem Metall bzw. einer Metalllegierung. Als Herstellungsverfahren kann dabei ein sog. Hotmolding-Verfahren oder RTM (Resin Transfer Molding) Verfahren eingesetzt werden, wenn beispielsweise Verbundwerkstoffe verarbeitet werden. Des Weiteren können beim Einsatz von Metallblechen diese beispielsweise entsprechend gebogen bzw. umgeformt werden, wobei wahlweise zusätzliche Lagen an Verbundwerkstoff(en) vorgesehen werden können. Dabei können beispielsweise Metalle bzw. Metalllegierungen und Verbundwerkstoffe so kombiniert werden, dass eine Korrosionsbildung im Wesentlichen verhindert werden kann.

Die Erfindung wurde in den Fig. 3 und 4 mit Bezug auf ein T-Profil 30 beschrieben. Die Ausführungen hierzu gelten aber auch entsprechend für ein L-Profil 42. Des Weiteren ist es auch möglich T- und L-Profile miteinander zu kombinieren. Dabei sind erfindungsgemäße Profile denkbar, bei denen die Holprofilabschnitte 16 beispielsweise in T-Profile 30 bzw. L-Profile 42 übergehen, wobei jeweils wahlweise Übergangsabschnitte 32 zwischen den Hohlprofilen 16 und T- bzw. L-Profilen 30, 42 vorgesehen werden können.

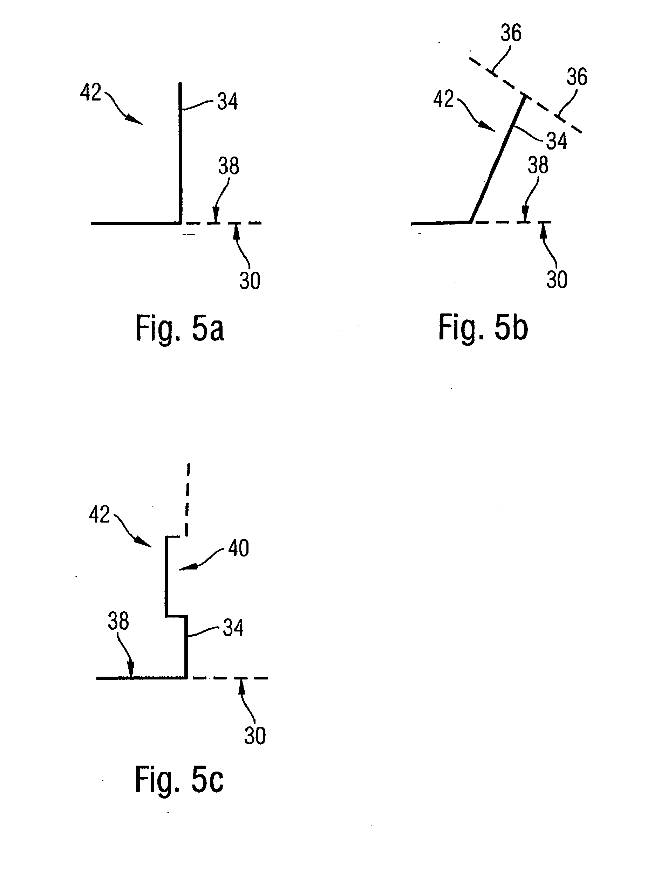

In den Fig. 5a-c sind verschiedene Beispiele gezeigt, wie der T-Profil- bzw. L-Profilabschnitt 30, 42 ausgebildet werden kann. Die vorliegende Erfindung ist jedoch nicht auf diese Beispiele beschränkt. Es ist für den Durchschnittsfachmann offensichtlich, dass es eine Vielzahl von Möglichkeiten gibt, das T-Profil 30 bzw. L-Profil 42 entsprechend auszugestalten.

In Fig. 5 ist ein Querschnitt eines T- bzw. L-Profilabschnitts 30, 42 gemäß der Erfindung gezeigt. Der T-Profilabschnitt 30 ist dabei jeweils gestichelt angedeutet, da der T-Profilabschnitt 30 eine Basis 38 aufweist, die sich zu beiden Seiten einer Wand 34 erstreckt, während sich die Basis 38 des L-Profilabschnitts 42 sich nur auf einer Seite der Wand 34 erstreckt. Grundsätzlich ist es aber auch möglich, die Basis 38 bei dem T- wie dem L-Profil ganz wegzulassen, so dass lediglich die Wand 34 verbleibt.

Bei dem T- bzw. L-Profilabschnitt 30 in Fig. 5a ist dabei die Wand 34 beispielsweise im Wesentlichen senkrecht zu der Basis 38 ausgebildet.

In Fig. 5b ist des Weiteren die Wand 34 geneigt zu der Basis 38 ausgebildet. Hierbei kann die Wand 34 des T- bzw. L-Profilabschnitts 30, 42 wahlweise zusätzlich auf einer oder beiden Seiten mit einer Art Dach 36 versehen sein, wie in Fig. 5b mit einer gestrichelten Linie angedeutet ist.

In einem weiteren Beispiel für ein T- bzw. L-Profil 30, 42, wie in Fig. 5c gezeigt ist, kann die Wand 34 abgestuft ausgebildet sein. Alternativ kann die Wand 34, wie mit einer gestrichelten Linie angedeutet ist, auch mit wenigstens einer Vertiefung 40 oder Nut ausgebildet sein.

Obwohl die vorliegende Erfindung anhand bevorzugter Ausführungsbeispiele vorliegend beschrieben wurde, ist sie darauf nicht beschränkt, sondern auf vielfältige Weise modifizierbar.

### Bezugszeichenliste

- 10: Rumpfsektion
- 12: Rumpfsektion
- 14: Außenhautelement
- 16: Stringer
- 18: Hohlprofil
- 20: Ende der Rumpfsektion
- 22: Band
- 24: Bandabschnitt
- 26: Niet
- 28: Profil
- 30: T-Profil
- 32: Übergangsabschnitt
- 34: Wand
- 36: Dach
- 38: Basis
- 40: Vertiefung
- 42: L-Profil

## Patentansprüche

1. Profil (28) zum Einsatz insbesondere in einem Luft- oder Raumfahrzeugs,
**dadurch gekennzeichnet**
**dass** das Profil (28) wenigstens einen Hohlprofilabschnitt (18) und wenigstens einen T- und/oder L-Profilabschnitt (30) aufweist.

2. Profil nach Anspruch 1,
**dadurch gekennzeichnet,**
**dass** das Profil (28) einen Übergangsabschnitt (32) zwischen wenigstens einem Hohlprofilabschnitt (18) und einem T- bzw. L-Profilabschnitt (30) aufweist.

3. Profil nach wenigstens einem Anspruch 1 oder 2,
**dadurch gekennzeichnet,**
**dass** das Profil (28) wenigstens zwei Hohlprofilabschnitte (18) aufweist, wobei die Hohlprofilabschnitte (18) die gleiche Querschnittsform oder eine voneinander verschiedene Querschnittsform aufweisen.

4. Profil nach wenigstens einem der Ansprüche 1 bis 3,
**dadurch gekennzeichnet,**
**dass** das Profil (28) wenigstens zwei oder mehr T-und/oder L-Profilabschnitte (30) aufweist, wobei die T-bzw. L-Profile (30) in ihren Abmessungen und/oder Formen identisch ausgebildet sein können oder verschieden voneinander.

5. Profil nach wenigstens einem der Ansprüche 1 bis 4,
**dadurch gekennzeichnet,**
**dass** das Profil (28) wenigstens zwei oder mehr Übergangsabschnitte (32) aufweist, wobei die Übergangsabschnitte (32) jeweils identisch oder voneinander verschieden ausgebildet sind.

6. Profil nach wenigstens einem der Ansprüche 1 bis 5,
**dadurch gekennzeichnet,**
**dass** der T- bzw. L-Profilabschnitt (30) über Nieten, Schrauben und/oder Bolzen mit einem anderen Bauteil, beispielsweise einem Clip, Cleat oder einem anderen T-bzw. L-Profilabschnitt (30) beispielsweise eines Stringers (16) oder Spants, verbindbar ist.

7. Profil nach wenigstens einem der Ansprüche 1 bis 6,
**dadurch gekennzeichnet,**
**dass** das Profil (28) als Stringer (16) und/oder Spant ausgebildet ist.

8. Profil nach wenigstens einem der Ansprüche 1 bis 7,
**dadurch gekennzeichnet,**
**dass** das Profil (28) wenigstens einen oder mehrere Verbundwerkstoffe aufweist, wobei die Verbundwerkstoffe beispielsweise GLARE, HSS-GLARE, CFK, GFK und/oder AFK aufweisen.

9. Profil nach wenigstens einem der Ansprüche 1 bis 8,
**dadurch gekennzeichnet,**
**dass** das Profil (28) Metall oder eine Metalllegierung, beispielsweise eine Aluminium oder Titanlegierung, aufweist.

10. Profil nach wenigstens einem der Ansprüche 1 bis 9,
**dadurch gekennzeichnet,**
**dass** das Profil (28) im Hotmolding-Verfahren hergestellt ist.

11. Profil nach wenigstens einem der Ansprüche 1 bis 10,
**dadurch gekennzeichnet,**
**dass** der T- und/oder L-Profilabschnitt (30) beispielsweise höher, gleich hoch oder kleiner als der Hohlprofilabschnitt (18) ausgebildet sind.

12. Verkehrsflugzeug, das wenigstens ein Profil (28) gemäß einem der Ansprüche 1 bis 11 aufweist.

## Claims

1. Profiled part (28) for use, in particular, within an aircraft or spacecraft,
**characterized in that**
the profiled part (28) comprises at least one hollow profiled part portion (18) and at least one T-shaped and/or L-shaped profiled part portion (30).

2. Profiled part according to claim 1,
**characterized in that**
the profiled part (28) comprises a transition portion (32) between at least one hollow profiled part portion (18) and a T-shaped or L-shaped profiled part portion (30).

3. Profiled part according to at least one of claims 1 or 2,
**characterized in that**
the profiled part (28) comprises at least two hollow profiled part portions (18), wherein the hollow profiled part portions (18) have the same cross-sectional shape or a different cross-sectional shape.

4. Profiled part according to at least one of claims 1 to 3,
**characterized in that**
the profiled part (28) comprises at least two or more T-shaped and/or L-shaped profiled part portions (30), wherein the T-shaped or L-shaped profiled parts (30) may be of identical or different size and/or shape.

5. Profiled part according to at least one of claims 1 to 4,
**characterized in that**
the profiled part (28) comprises at least two or more transition portions (32), wherein the transition portions (32) are in each case identical or different from one another.

6. Profiled part according to at least one of claims 1 to 5,
**characterized in that**
the T-shaped or L-shaped profiled part portion (30) can be connected to another component, such as a clip, a cleat or another T-shaped or L-shaped profiled part portion (30), for example of a stringer (16) or a former, using rivets, screws and/or bolts.

7. Profiled part according to at least one of claims 1 to 6,
**characterized in that**
the profiled part (28) is configured as a stringer (16) and/or a former.

8. Profiled part according to at least one of claims 1 to 7,
**characterized in that**
the profiled part (28) comprises at least one or more composite materials, the composite materials including, for example, GLARE, HSS-GLARE, CFRP, GFRP and/or AFRP.

9. Profiled part according to at least one of claims 1 to 8,
**characterized in that**
the profiled part (28) comprises metal or a metal alloy, for example an aluminium or titanium alloy.

10. Profiled part according to at least one of claims 1 to 9,
**characterized in that**
the profiled part (28) is produced by a hot molding method.

11. Profiled part according to at least one of claims 1 to 10,
**characterized in that**
the T-shaped and/or L-shaped profiled part portion (30) is/are configured, for example, so as to be taller than, have the same height as or be shorter than the hollow profiled part portion (18).

12. Commercial aircraft comprising at least one profiled part (28) according to one of claims 1 to 11.

## Revendications

1. Profilé (28) destiné à être utilisé notamment dans un aéronef ou un véhicule spatial, **caractérisé par le fait que** le profilé (28) présente au moins une section à profil creux (18) et au moins une section à profil en T et/ou en L (30).

2. Profilé selon la revendication 1, **caractérisé par le fait que** le profilé (28) présente une section de transition (32) entre au moins une section à profil creux (18) et une section à profil en T et/ou en L (30).

3. Profilé selon au moins une des revendications 1 ou 2, **caractérisé par le fait que** le profilé (28) présente au moins deux sections à profil creux (18), les sections à profil creux (18) présentant la même forme de section transversale ou une forme de section transversale différente entre elles.

4. Profilé selon au moins une des revendications 1 à 3, **caractérisé par le fait que** le profilé (28) présente au moins deux ou plusieurs sections à profil en T et/ou en L (30), les sections en T et/ou en L (30) pouvant être formées de manière identique dans leurs dimensions et/ou dans leurs formes ou de manière différente entre elles.

5. Profilé selon au moins une des revendications 1 à 4, **caractérisé par le fait que** le profilé (28) présente au moins deux ou plusieurs sections de transition (32), les sections de transition (32) étant formées respectivement de manière identique ou de manière différente entre elles.

6. Profilé selon au moins une des revendications 1 à 5, **caractérisé par le fait que** la section à profil en T et/ou en L (30) peut être raccordée au moyen de rivets, de vis et/ou de boulons avec un autre élément, par exemple avec une attache, un taquet ou une autre section à profil en T et/ou en L (30) par exemple d'une bande (16) ou d'un couple.

7. Profilé selon au moins une des revendications 1 à 6, **caractérisé par le fait que** le profilé (28) a une forme de bande (16) et/ou de couple.

8. Profilé selon au moins une des revendications 1 à 7, **caractérisé par le fait que** le profilé (28) présente au moins un ou plusieurs matériaux composites, les matériaux composites présentant par exemple du GLARE, du HSS-GLARE, du PRFC, du RPFV et/ou du PRFA.

9. Profilé selon au moins une des revendications 1 à 8, **caractérisé par le fait que** le profilé (28) présente du métal ou un alliage de métal, par exemple un alliage d'aluminium ou de titane.

10. Profilé selon au moins une des revendications 1 à 9, **caractérisé par le fait que** le profilé (28) est fabriqué selon une technique de moulage à chaud.

11. Profilé selon au moins une des revendications 1 à 10, **caractérisé par le fait que** la section à profil en T et/ou en L (30) est formée par exemple d'une taille supérieure, égale ou inférieure à la section à profil creux (18).

12. Avion de ligne qui présente au moins un profilé (28) selon une des revendications 1 à 11.
